# EUROPÄISCHE PATENTSCHRIFT

(11) **EP 1 627 896 B1**
(45) Veröffentlichungstag und Bekanntmachung des Hinweises auf die Patenterteilung: **05.03.2008**
(21) Anmeldenummer: 05017266.7
(22) Anmeldetag: 09.08.2005
(51) Int. Cl.: C08K 5/00, C09D 5/18

(54) **Intumeszenzbrandschutzbeschichtung enthaltend Phosphor/Stickstoff-Flammschutzmittel und ein Phosphinsäuresalz**
Intumescent fireproof coating comprising a phosphorous/nitrogen-fire retardant and a phosphinic acid salt
Revêtement intumescent résistant au feu comprenant des composés de phosphore-azote et des sels d'acides phosphiniques comme agents ignifugeants

(30) Priorität: 17.08.2004 DE 102004039758
(43) Veröffentlichungstag der Anmeldung: 22.02.2006
(73) Patentinhaber: Clariant Produkte (Deutschland) GmbH, 65929 Frankfurt am Main (DE)
(72) Erfinder: Thewes, Volker, 50374 Erftstadt (DE); Hennemann, Achim, 65719 Hofheim (DE)

(56) Entgegenhaltungen:
- EP-A- 1 396 521
- EP-A- 1 400 573
- EP-A- 1 403 311

## Beschreibung

Die Erfindung betrifft eine dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen.

Dämmschichtbildende Brandschutzbeschichtungen, auch Intumeszenzbeschichtungen genannt, zeichnen sich dadurch aus, dass sie im Brandfall unter entsprechender Temperatureinwirkung aufschäumen und durch dieses Aufschäumen der vorgenannten Brandschutzbeschichtung der Wärmedurchtritt auf Stahlkonstruktionen, Decken, Wände, Kabel, Rohre und dergleichen verhindert oder zumindest behindert wird.

Die US-A-4,965,296 beschreibt ein flammhemmendes Material, das sich aus einem flammhemmenden Beschichtungsmaterial und einem elektrisch leitfähigen Material zusammensetzt. Das flammhemmende Beschichtungsmaterial besteht dabei aus schaum- und kohlenstoffbildenden Substanzen, einer gaserzeugenden Verbindung, einem filmbildenden Bindemittel und entsprechenden Lösemitteln. Fakultativ können übliche, weitere Inhaltsstoffe anwesend sein.

In der US-A-4,879,320 wird eine ähnliche flammhemmende Zusammensetzung beschrieben, der jedoch anstelle eines leitfähigen Materials ein keramisches Fasermaterial zugesetzt ist.

Die US-A-6,096,812 beschreibt eine auf Epoxidharzen basierende intumeszierende Beschichtung mit einer besonders geringen spezifischen Dichte des getrockneten Films.

Diese Beschichtungen werden hauptsächlich für den Schutz von Schiffen, Ölplattformen und anderen Einrichtungen zur Lagerung und Verarbeitung von entzündlichen Kohlenwasserstoffen verwendet. Im Allgemeinen benötigen diese Einrichtungen eine hohe Menge an Brandschutzmaterial um eine ausreichende Isolierung der metallischen Komponenten sicherstellen zu können. Dieses führt automatisch zu einer signifikanten Erhöhung der Gewichtsbeladung der zu schützenden Strukturen. Häufig ist allerdings die zusätzliche Gewichtsbeladung der tragenden und nicht tragenden Metallstrukturen limitiert (z.B. auf Ölplattformen).

Das Ziel der vorgenannten Brandschutzbeschichtungen aus dem Stand der Technik ist es, mit möglichst geringen Auftragsmengen möglichst lange Feuerwiderstandszeiten zu erreichen.

Ein Lösungsansatz für geringere Auftragsmengen kann über eine Reduzierung der spezifischen Dichte des getrockneten Films erreicht werden (US-A-6,096,812). Nachteilig ist, dass dabei häufig eine Reduzierung der Brandschutzleistung einhergeht.

Nachteilig bei den vorgenannten Brandschutzbeschichtungen ist insgesamt, dass die im Brandfall gebildeten Schaumstrukturen keine bessere Isolationswirkung zulassen und der Reaktionsstart erst bei Temperaturen T ≥ 180°C stattfindet.

Vielfach findet der Reaktionsstart sogar erst bei Temperaturen weiter oberhalb dieser Grenze statt.

Es ist daher Aufgabe der nachfolgenden Erfindung, solche Brandschutzbeschichtungen zur Verfügung zu stellen, die bei gleicher Auftragsmenge verlängerte Feuerwiderstandszeiten oder bei reduzierter Auftragsmenge bereits gleiche Feuerwiderstandszeiten wie im Stand der Technik erreichen.

Diese Aufgabe wird durch eine Brandschutzbeschichtung gelöst, deren Reaktionsstart bei Temperaturen T< 180°C (also unterhalb 180°C) stattfindet.

Gegenstand der Erfindung ist daher eine dämmschichtbildende Brandschutzbeschichtung, die dadurch gekennzeichnet ist, dass sie eine Flammschutzmischung enthält, welche ein Phosphor/Stickstoff-Flammschutzmittel und ein Phosphinsäuresalz der Formel (I) und/oder ein Diphosphinsäuresalz der Formel (II) und/oder deren Polymere enthält, 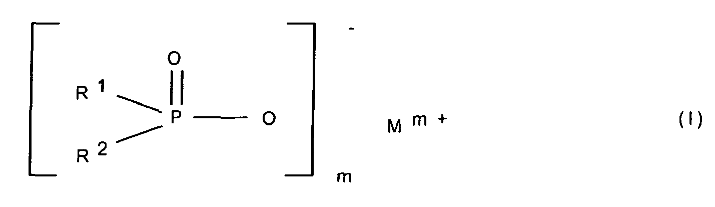 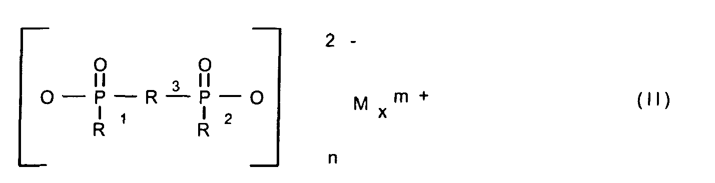 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4; n 1 bis 4 und x 1 bis 4 bedeuten.
und wobei sie
- A): 10 bis 90 Gew.-% eines Epoxidharzes und
- B): 2 bis 60 Gew.-% einer Flammschutzmischung, welche ein Phosphor/Stickstoff-Flammschutzmittel und ein Phosphinsäuresalz der Formel (I) und/oder ein Diphosphinsäuresalz der Formel (II) und/oder deren Polymere enthält,
- C): 3 bis 45 Gew.-% weitere Zusätze enthält.

Bevorzugt handelt es sich bei den Phosphor/Stickstoff-Flammschutzmitteln um stickstoffhaltige Phosphate der Formeln (NH4)y H3-y P04 bzw. (NH4 P03)z, mit y gleich 1 bis 3 und z gleich 1 bis 10.000.

Besonders bevorzugt handelt es sich bei den Phosphor/Stickstoff-Flammschutzmitteln um Ammoniumhydrogenphosphat, Ammoniumdihydrogenphosphat und/oder Ammoniumpolyphosphat.

Bei den Phosphor/Stickstoff-Flammschutzmitteln handelt es sich bevorzugt um Ammoniumpolyphosphat der Formel (NH₄PO₃)ₙ, worin n eine Zahl von 10 bis
≤ 1000, bevorzugt zwischen 200 bis ≤ 1000 bedeutet.
Bevorzugt handelt es sich bei den Phosphor/Stickstoff-Flammschutzmitteln auch um Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren sowie Gemische dieser Produkte.

Besonders bevorzugt handelt es sich bei den Phosphor/Stickstoff-Flammschutzmitteln um Melam, Melem oder Melon, Dimelaminphosphat, Dimelaminpyrophosphat, Melaminphosphat, Melaminpyrophosphat, Melaminpolyphosphat, Melampolyphosphat, Melonpolyphosphat und/oder Melempolyphosphat bzw. gemischte Polysalze hiervon.

Bevorzugt enthält die erfindungsgemäße dämmschichtbildende Brandschutzbeschichtung das Phosphor/Stickstoff-Flammschutzmittel und das Phosphinsäuresalz der Formel (I) und/oder das Diphosphinsäuresalz der Formel (II) und/oder deren Polymere im Gewichtsverhältnis von 0,1 bis 100 (Phosphor/Stickstoff-Flammschutzmittel) zu 100 bis 0,1 (Phosphinsäuresalz).

Besonders bevorzugt enthält die erfindungsgemäße dämmschichtbildende Brandschutzbeschichtung das Phosphor/Stickstoff-Flammschutzmittel und das Phosphinsäuresalz der Formel (I) und/oder das Diphosphinsäuresalz der Formel (II) und/oder deren Polymere im Gewichtsverhältnis von 1 bis 50 (Phosphor/Stickstoff-Flammschutzmittel) zu 50 bis 1 (Phosphinsäuresalz) enthält.

Besonders bevorzugt enthält die erfindungsgemäße dämmschichtbildende Brandschutzbeschichtung auch
A) 30 bis 85 Gew.-% eines Epoxidharzes und
B) 3 bis 50 Gew.-% einer Flammschutzmischung, welche ein Phosphor/Stickstoff-Flammschutzmittel und ein Phosphinsäuresalz der Formel (I) und/oder ein Diphosphinsäuresalz der Formel (II) und/oder deren Polymere enthalten,
C) 5 bis 40 Gew.-% weitere Zusätze.

Besonders enthält die erfindungsgemäße dämmschichtbildende Brandschutzbeschichtung weiterhin 0 bis 60 Gew.-% an Zusätzen, wie Beschleuniger, Füll- und Hilfsstoffe, Treibmittel und Stickstoffsynergisten, Kohlenstoffspender, Pigmente, Flexibilisatoren und/oder Reaktiv-Verdünner sowie ggf. weitere Additive. Die Gesamtsumme aller Komponenten beträgt dabei immer 100 Gew.-%.

Bevorzugt bedeutet M Calcium, Aluminium oder Zink.

Bevorzugt sind R¹, R² gleich oder verschieden sind und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen.

Unter protonierten Stickstoffbasen werden bevorzugt die protonierten Basen von Ammoniak, Melamin, Triethanolamin, insbesondere NH₄⁺, verstanden.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Die erfindungsgemäß eingesetzten halogenfreien Epoxidverbindungen (im Folgenden auch Polyepoxidverbindungen genannt) können gesättigt oder ungesättigt sowie aliphatisch, cycloaliphatisch, aromatisch und/oder heterocyclisch sein. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen oder ähnliche. Es können auch Gemische verschiedener Polyepoxidverbindungen verwendet werden. Das mittlere Molekulargewicht Mn dieser Polyepoxidverbindungen kann bis zu etwa 9000 betragen, liegt jedoch im Allgemeinen bei etwa 150 bis 4000.

Beispielsweise handelt es sich bei diesen Polyepoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen, wie Phenol und/oder Kresole, mit Aldehyden, insbesondere Formaldehyd in Gegenwart saurer Katalysatoren), die man in bekannter Weise, beispielsweise durch Umsetzung der jeweiligen Polyole mit Epichlorhydrin, erhält.

Als mehrwertige Phenole sind hier beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4-Dihydroxydiphenyl, 4,4'-Dihydroxybenzophenon, Bis-(4-hydroxyphenyl)- 1,1-ethan, Bis-(4-hydroxyphenyl)-1,1'-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-1,1'-ether.

Bisphenol A und Bisphenol F sind hierbei bevorzugt.

Auch die Polyglycidylether von mehrwertigen aliphatischen Alkoholen sind als Polyepoxidverbindung geeignet. Als Beispiele derartiger mehrwertiger Alkohole seien 1,4-Butandiol, 1,6-Hexandiol, Polyalkylenglykole, Glycerin, Trimethylolpropan, Bis-(4-hydroxycyclohexyl)-2,2-propan und Pentaerythrit genannt.

Weiter kommen als Polyepoxidverbindungen auch (Poly)glycidester in Frage, die man erhält durch Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Phthal-, Isophthal-, Terephthal-, Tetrahydrophthal- oder Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Auch Polyepoxidverbindungen, die die Epoxidgruppen in statistischer Verteilung über die Molekülkette enthalten und die durch Emulsions-Copolymerisation unter Verwendung von olefinisch ungesättigten, diese Epoxidgruppen enthaltenden Verbindungen hergestellt werden können, wie z.B. Glycidylester der Acryl- oder Methacrylsäure, können in manchen Fällen vorteilhaft eingesetzt werden.

Weitere verwendbare Polyepoxidverbindungen sind beispielsweise solche auf der Basis heterocyclischer Ringsysteme, wie z.B. Hydantoinepoxidharze, Triglycidylisocyanurat und/oder dessen Oligomeren, Triglycidyl-p-aminophenol, Triglycidyl-p-aminodiphenylether, Tetraglycidyldiaminodiphenyimethan, Tetraglycidyldiaminodiphenylether, Tetrakis(4-glycidoxyphenyl)-ethan, Urazolepoxide. Uracilepoxide, oxazolidinonmodifizierte Epoxidharze. Weiterhin Polyepoxide auf der Basis von aromatischen Aminen, wie Anilin, beispielsweise N,N-Diglycidylanilin, Diaminodiphenylmethan und N,N'-Dimethylaminodiphenylmethan oder -sulfon. Weitere geeignete Polyepoxidverbindungen sind im "Handbook of Epoxy Resins" von Henry Lee und Kris Neville, McGraw-Hill Book Company, 1967, in der Monographie von Henry Lee "Epoxy Resins" American Chemical Society, 1970, in Wagner/Sarx, Lackkunstharze", Carl Hanser Verlag (1971), 5. Auflage, S. 174-196 in der "Angew. Makromol. Chemie", Bd. 44 (1975), Seiten 151 bis 163. in der DE-A- 27 57 733 sowie in der EP-A- 0 384 939 beschrieben, auf die hiermit Bezug genommen wird.
Bevorzugt eingesetzte Polyepoxidverbindungen sind Bisglycidylether auf Basis von Bisphenol A, Bisphenol F und Bisphenol S (Umsetzungsprodukte dieser Bisphenole und Epichlor(halogen)hydrin) oder deren Oligomere, Polyglycidylether von Phenol/Formaldehyd- und/oder Kresol/Formaldehyd-Novolake sowie Diglycidylester der Phthal-, Isophthal- Terephthal-, Tetrahydrophthal- und/oder Hexahydrophthalsäure sowie der Trimellithsäure, N- Glycidylverbindungen von aromatischen Aminen und heterocyclischen Stickstoffbasen, wie N,N-Diglyadyianilin, N,N,O-Triglycidyl-p-aminophenol, Triglycidylisocyanurat und N,N,N',N-Tetraglycidyl-bis-(p-aminophenyl)-methan, Hydrantoin-Epoxidharze und Aracid-Epoxidharze sowie Di- und Polyglycidylverbindungen von mehrwertigen aliphatischen Alkoholen, wie 1,4-Butandiol, Trimethylolpropan und Polyalkylenglykolen. Des Weiteren sind auch oxazolidinonmodifizierte Epoxidharze geeignet. Derartige Verbindungen sind bereits bekannt (siehe: "Angew. Makromol. Chem., Bd. 44 (1975) Seiten 151 bis 163, sowie US-A-3,334,110); beispielhaft sei hierfür das Umsetzungsprodukt von Bis-phenol-A-diglycidylether mit Diphenylmethandiisocyanat (in Gegenwart eines geeigneten Beschleunigers) genannt.

Die Polyepoxidharze können bei der Herstellung der erfindungsgemäßen Brandschutzbeschichtung einzeln oder im Gemisch vorliegen. Als Härter-Komponenten kommen aliphatische und aromatische Polyamine in Frage. Aromatische Polyamine sind beispielsweise in der EP-A-0 274 646 beschrieben. Sie werden durch Trimerisierung von 2,6- oder 2,4-Disocyanatoalkylbenzolen und nachfolgender Hydrolyse der verbleibenden Isocyanatgruppen hergestellt. Solche Härter-Komponenten können einzeln oder im Gemisch eingesetzt werden. Derartige Gemische sind großtechnisch erhältlich und erlauben eine kostengünstige Herstellung der Härterkomponente.

Als weitere additive Härterkomponente (d.h. zusätzlich zum eigentlichen Härter) können heterocyclische Polyamine mit Harnstoffgruppen eingesetzt werden. Auch andere aromatische Polyamine, wie etwa 4,4'-Diammodiphenylmethan, 4,4'-Diaminodiphenylsufon, und/oder andere heterocyclische Polyamine können mit einem Gewichtsanteil bis zu maximal 30 % im Härter-Gemisch eingesetzt werden.

Bevorzugt enthält die erfindungsgemäße Brandschutzbeschichtung als weitere Zusätze Beschleuniger, Füll- und Hilfsstoffe, Treibmittel und Stickstoffsynergisten, Kohlenstoffspender, Pigmente, Flexibilisatoren und/oder Reaktiv-Verdünner.

Als Beschleuniger kommen vor allem Imidazolderivate, beispielsweise 2-Methylimidazol, 2-Phenylimidazol und 2-Heptadecylimidazol in Frage; weiterhin Phosphine, tertiäre Amine wie Benzylmethylamin und Tris- (dimethylaminomethyl)phenol sowie Metallseifen und Acetylacetonate.

Füll- und Hilfsstoffe sind beispielsweise expandierbarer Graphit, Borsäure, Phosphorsäureester, Quarz, Bolus Alba (China Clay), Kreide, Wollastonit, Talkum, Antimontrioxid, Glasfasern, Mineralfasern, Aluminiumoxid, Aluminiumhydroxid, Magnesiumhydroxid, Fällungskieselsäuren, Silikate und/oder pulverisierte Cellulosen.

Treibmittel und Stickstoffsynergisten sind Melamin und/oder Guanidin sowie deren Salze und/oder Dicyandiamide. Bevorzugt handelt es sich bei den Melaminsalzen um Melaminphoshat, Melaminpolyphosphat, Melamincyanurat, Melaminborat, Melaminsilikat und bei dem Guanidinsalz um Guanidinphosphat.

Wie oben bereits ausgeführt, kann die erfindungsgemäße dämmschichtbildende Brandschutzbeschichtung 0 bis 60 Gew.-% an Zusätzen enthalten. Innerhalb dieses Bereichs von 0 bis 60 Gew.-% können sich die Zusätze mengenmäßig wie folgt verteilen:
Beschleuniger: 0 bis 25 Gew.-%,
Füll- und Hilfsstoffe: 0 bis 100 Gew.-%,
Treibmittel und Stickstoffsynergisten: 0 bis 100 Gew.-%,
Kohlenstoffspender: 0 bis 100 Gew.-%,
Pigmente: 0 bis 50 Gew.-%,
Flexibilisatoren: 0 bis 50 Gew.-%,
Reaktiv-Verdünner: 0 bis 25 Gew.-%.

Die Prozentangaben der jeweiligen Zusätze beziehen sich also jeweils auf die zuvor genannten 0 bis 60 Gew.-% absolut.
Bevorzugt handelt es sich bei den stickstoffhaltigen Synergisten um solche der Formeln (III) bis (VIII) oder Gemische davon 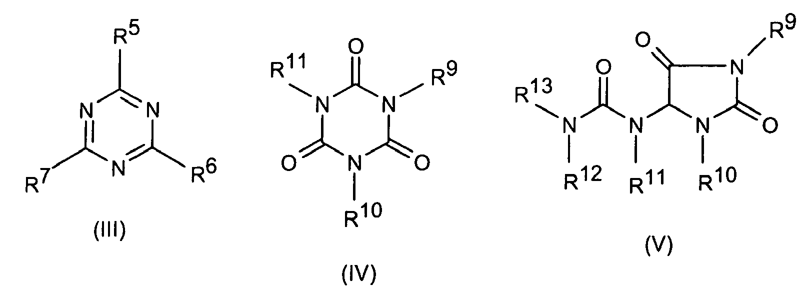 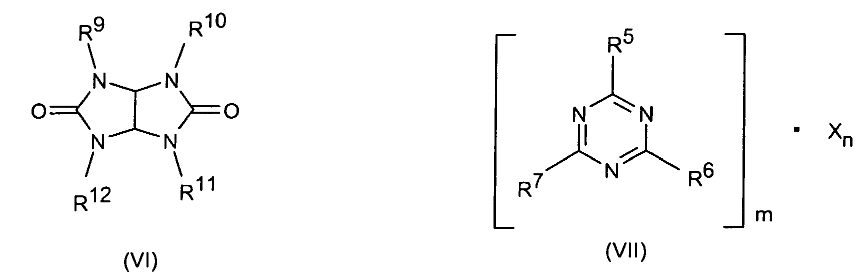 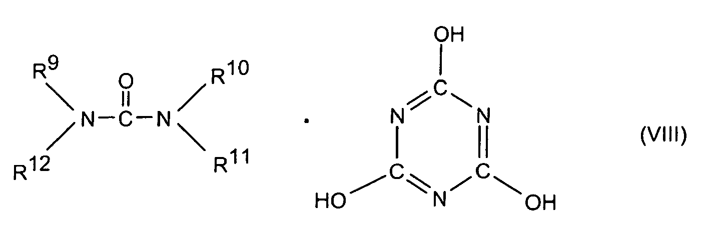 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄- Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄₋Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten;
oder um oligomere Ester des Tris(hydroxyethyl)isocyanurats mit aromatischen Polycarbonsäuren

Bevorzugt handelt es sich bei den stickstoffhaltigen Synergisten um Benzoguanamin, Tris(hydroxyethyl)isocyanurat, Allantoin, Glycouril, Melamin, Melamincyanurat, Harnstoffcyanurat, Dicyandiamid, Guanidin.

Bevorzugt handelt es sich bei den Stickstoffsynergisten um Kondensationsprodukte des Melamins. Kondensationsprodukte des Melamins sind z.B. Melem, Melam oder Melon bzw. höher kondensierte Verbindungen dieses Typs sowie Gemische derselben und können z.B. durch ein Verfahren hergestellt werden, wie es in WO-A-96/16948 beschrieben ist.

Bevorzugt enthält die dämmschichtbildende Brandschutzbeschichtung als kohlenstoffbildende Substanzen Kohlenhydrate.

Bevorzugt werden als Kohlenhydrate Pentaerythrit, Dipentaerythrit, Tripentaerythrit und/oder Polykondensate des Pentaerythrits eingesetzt.

Als Pigmente können Gasruß, Phthalocyanin-Pigmente und Metalloxide eingesetzt werden. Bevorzugt wird als Metalloxid Titandioxid verwendet.

Zur Verbesserung der Zähigkeit der Brandschutzbeschichtung können als Flexibilisatoren Butadien-Acrylnitril-Kautschuk und andere aliphatische Polymere verwendet werden.

Als Reaktiv-Verdünner kommen beispielsweise mono- oder polyfunktionelle, niedermolekulare Alkohole, die mit Epichlorhydrin umgesetzt werden, in Frage.

Das für die erfindungsgemäße Brandschutzbeschichtung eingesetzte Epoxidharz ist üblicherweise aus einer Epoxidharz-Komponente und einer Härter-Komponente zusammengesetzt.

Als Epoxidharz-Komponente sind Bisphenol A, Bisphenol F oder Gemische hiervon und als Härter-Komponente aliphatische Amine bevorzugt.

Die vorliegende Aufgabe wird ebenfalls gelöst durch ein Verfahren zur Herstellung von intumeszierenden Brandschutzbeschichtungen aus Epoxidharzen und der vorgenannten Flammschutzmischung, dadurch gekennzeichnet, dass man ein Epoxidharz mit der Flammschutzmischung umsetzt und anschließend mit einem Härter in die Brandschutzbeschichtung überführt.
Beim Verfahren können, falls gewünscht, auch Lösungs- und Verdünnungsmittel eingesetzt werden. Dabei sind aprotische polare Lösungsmittel bevorzugt. Beispiele hierfür sind: N-Methylpyrrolidon, Dimethylformamid, Ether wie etwa Diethylether, Tetrahydrofuran, Dioxan, Ethylglykolether, Propylenglykolether, Butylglykolether von Monoalkoholen mit einem ggf. verzweigten Alkylrest von 1 bis 6 Kohlenstoffatomen.

Andere Lösungsmittel sind z.B. Ketone, wie etwa Aceton, Methylethylketon, Methylisopropylketon, Methylisobutylketon Cyclohexanon und ähnliche, aber auch Ester, wie Ethylacetat. Butylacetat, Ethylenglykolacetat und Methoxypropylacetat können eingesetzt werden. Weitere geeignete Lösungsmittel sind halogenierte Kohlenwasserstoffe sowie cycloaliphatische und/oder aromatische Kohlenwasserstoffe, bevorzugt sind dabei Hexan, Heptan, Cyclohexan, Toluol sowie Dixylole. Es ist möglich, diese Lösemittel einzeln oder im Gemisch einzusetzen.

Bevorzugt erfolgt die Umsetzung des Epoxidharzes mit der Flammschutzmittelmischung (Komponente A + B) und dem Härter bei Temperaturen von -10 bis +150°C.

Die Erfindung betrifft ebenfalls die Verwendung der vorgenannten Brandschutzbeschichtungen. Bevorzugt werden diese erfindungsgemäßen Brandschutzbeschichtungen zum Beschichten von tragenden und nicht tragenden metallischen Strukturen oder Gebilden verwendet. Des Weiteren lassen sich Fußböden, Wände oder Formteile mit den erfindungsgemäßen Brandschutzbeschichtungen gegen Temperaturbeanspruchung schützen.

Die erfindungsgemäßen Brandschutzbeschichtungen weisen eine gute Flammwidrigkeit auf und lassen sich auf einfache Art und Weise verarbeiten. Dabei ist bevorzugt, dass das Epoxidharz und die Härterkomponenten oder die Bestandteile welche diese enthalten kurz vor der Applikation vermischt werden. Zusätzlich ist bevorzugt, dass die Epoxidharz enthaltenden und die Härterkomponenten enthaltenden Systeme erwärmt werden um die Viskosität zu erniedrigen. Dadurch wird die Sprühapplikation - bevorzugt im Airless Verfahren - vereinfacht. Typischerweise werden die zu erwärmenden Systeme auf 50°C bis 75°C aufgeheizt, bevorzugt sollten die zu erwärmenden Systeme direkt vor der Applikation eine Temperatur zwischen 65°C und 70°C aufweisen.
In den folgenden Beispielen wurden intumeszierende Brandschutzbeschichtungen hergestellt und ihre Wirksamkeit ermittelt. Die Prüfung der thermischen Isolierfähigkeit der intumeszierenden Brandschutzbeschichtungen erfolgte in einem Kleinprüfstand analog DIN4102 Teil 8 (1986) unter der Verwendung der Aufheizkurve analog ISO834 (1975). Die thermogravimetrische Bewertung der Flammschutzmittelmischung wurde analytisch mittels einer Thermowaage des Typs "NETZSCH STA 409C" durchgeführt.

### Beispiele 1 bis 5

In den Beispielen wurden folgende Produkte eingesetzt:
^{®}Exolit AP422 (Clariant GmbH)
   Bei ^{®}Exolit AP422 handelt es sich um ein freifließendes, pulverförmiges, in Wasser schwer lösliches Ammoniumpolyphosphat der Formel (NH₄PO₃)ₙ mit n = 20 bis 1000, insbesondere 200 - 1000.
^{®}Exolit AP750 (Clariant GmbH)
   Es handelt es sich um eine halogenfreie Flammschutzmittelmischung, die polymeres Ammoniumpolyphosphat in Verbindung mit aromatischen Carbonsäureestern des Tris(2-hydroxyethyl)-isocyanurates als Synergisten enthält.
^{®}Exolit OP1230 (Clariant GmbH)
Bei ^{®}Exolit OP1230 handelt es sich um ein feinkörniges, nicht hygroskopisches und in Wasser und gängigen organischen Lösungsmitteln unlöslichen Pulvers auf Basis eines organischen Phosphinates.
   ^{®}Beckopox EP140 (UCB-Surface Specialties)

Es handelt sich um ein niedermolekulares Kondensationsprodukt aus Bisphenol A und Epichlorhydrin mit einer Dichte von 1,16 g/ml (bei 25°C)und einem EpoxidÄquivalentgewicht von 180 - 190.
^{®}Beckopox EH624 (UCB-Surface Specialties)
   Es handelt sich um ein aliphatisches Polyamin mit einem H-aktivem Äquivalentgewicht von 80 g/mol und einer dynamischen Viskosität von 2300 - 3800 mPas (bei 23°C).
Tronox^{®} R-KB-5 (Kerr Mc-Gee Chemical LLC)
   Es handelt sich um eine Titandioxid Rutil Type, welche mit Al₂O₃ stabilisiert wurde und die Oberfläche mit Al- und Zr- Komponenten behandelt wurde.
Optibor^{®} Borsäure (Deutsche Borax GmbH)
   Es handelt sich um eine reine Borsäure der Formel (H₃BO₃)

### Beispiel 1 (Vergleich)

In einem Rührgefäß wurden nacheinander 100 Teile Beckopox EP 140, 25 Teile Borsäure, 2 Teile TiO₂ und 100 Teile Exolit AP422 eingetragen und nach ausreichender Durchmischung mit 43 Teilen Beckopox EH 624 umgesetzt. Die resultierende Brandschutzbeschichtung wurde mit einer Rolle einseitig auf eine Stahlplatte (St 37) von 280 x 280 x 6 mm aufgetragen. Die Masse härtete einen Tag bei Raumtemperatur aus, ihre Schichtdicke wurde mit 3,5 mm ermittelt.
Die Oberfläche der Beschichtung war glatt und rissfrei.
Die Brandprüfung der beschichteten Platte gemäß DIN 4102 ergab eine Feuerwiderstandszeit von 33 Minuten. Die Reaktion startete bei T = 240°C.

### Beispiel 2 (Vergleich)

Es wurde die gleiche Brandschutzbeschichtung wie im Beispiel 1 hergestellt, jedoch Exolit AP750 anstatt Exolit AP422 verwendet. Die resultierende Brandschutzbeschichtung wurde mit einer Rolle einseitig auf eine Stahlplatte (St 37) von 280 x 280 x 6 mm aufgetragen. Die Masse härtete einen Tag bei Raumtemperatur aus, ihre Schichtdicke wurde mit 3,5 mm ermittelt.
Die Oberfläche der Beschichtung war glatt und rissfrei.
Die Brandprüfung der beschichteten Platte gemäß DIN 4102 ergab eine Feuerwiderstandszeit von 41 Minuten. Die Reaktion startete bei T = 220°C.

### Beispiel 3 (Erfindung)

In einem Rührgefäß wurden nacheinander 100 Teile Beckopox EP 140, 25 Teile Borsäure, 9 Teile Tris(hydroxyethyl)isocyanurat, 2 Teile TiO₂ und 5 Teile einer ungleichteiligen Flammschutzmittelmischung bestehend aus Exolit AP422 und Exolit OP1230 eingetragen und nach ausreichender Durchmischung mit 43 Teilen Beckopox EH 624 umgesetzt. Die resultierende Brandschutzbeschichtung wurde mit einer Rolle einseitig auf eine Stahlplatte (St 37) von 280 x 280 x 6 mm aufgetragen.

Die Masse härtete einen Tag bei Raumtemperatur aus, ihre Schichtdicke wurde mit 3,5 mm ermittelt.
Die Oberfläche der Beschichtung war glatt und rissfrei.
Die Brandprüfung der beschichteten Platte gemäß DIN 4102 ergab eine Feuerwiderstandszeit von 44 Minuten. Die Reaktion startete bei T = 179°C.

### Beispiel 4 (Erfindung)

In einem Rührgefäß wurden nacheinander 100 Teile Beckopox EP 140, 25 Teile Borsäure, 9 Teile Tris(hydroxyethyl)isocyanurat, 2 Teile TiO₂ und 60 Teile einer ungleichteiligen Flammschutzmittelmischung bestehend aus Exolit AP422 und Exolit OP1230 eingetragen und nach ausreichender Durchmischung mit 43 Teilen Beckopox EH 624 umgesetzt. Die resultierende Brandschutzbeschichtung wurde mit einer Rolle einseitig auf eine Stahlplatte (St 37) von 280 x 280 x 6 mm aufgetragen. Die Masse härtete einen Tag bei Raumtemperatur aus, ihre Schichtdicke wurde mit 3,5 mm ermittelt.
Die Oberfläche der Beschichtung war glatt und rissfrei.
Die Brandprüfung der beschichteten Platte gemäß DIN 4102 ergab eine Feuerwiderstandszeit von 49 Minuten. Die Reaktion startete bei T = 175°C.

### Beispiel 5

In einem Rührgefäß wurden nacheinander 100 Teile Beckopox EP 140, 25 Teile Borsäure, 9 Teile Tris(hydroxyethyl)isocyanurat, 2 Teile TiO₂ und 140 Teile einer ungleichteiligen Flammschutzmittelmischung bestehend aus Exolit AP422 und Exolit OP1230 eingetragen und nach ausreichender Durchmischung mit 43 Teilen Beckopox EH 624 umgesetzt. Die resultierende Brandschutzbeschichtung wurde mit einer Rolle einseitig auf eine Stahlplatte (St 37) von 280 x 280 x 6 mm aufgetragen. Die Masse härtete einen Tag bei Raumtemperatur aus, ihre Schichtdicke wurde mit 3,5 mm ermittelt.
Die Oberfläche der Beschichtung war glatt und rissfrei.
Die Brandprüfung der beschichteten Platte gemäß DIN 4102 ergab eine Feuerwiderstandszeit von 59 Minuten. Die Reaktion startete bei T = 164°C.

### Beispiel 6

Es wurde die gleiche Brandschutzbeschichtung wir im Beispiel 5 hergestellt, jedoch betrug die Auftragsdicke 2,0 mm. Die Oberfläche der Beschichtung war glatt und rissfrei.
Die Brandprüfung der beschichteten Platte gemäß DIN 4102 ergab eine Feuerwiderstandszeit von 42 Minuten. Der Reaktion startete bei T = 166°C.

### Beispiel 7 (Erfindung)

Die Flammschutzmittelmischung aus Beispiel 3 und 4, sowie die darin enthaltenden Einzelkomponenten Exolit AP422 und Exolit OP1230 wurden mittels Thermogravimetrie verglichen. Der signifikant frühere Reaktionsstart der Flammschutzmittelmischung zeigt den Synergismus im Vergleich zu den Einzelkomponenten auf (Anlage 1).

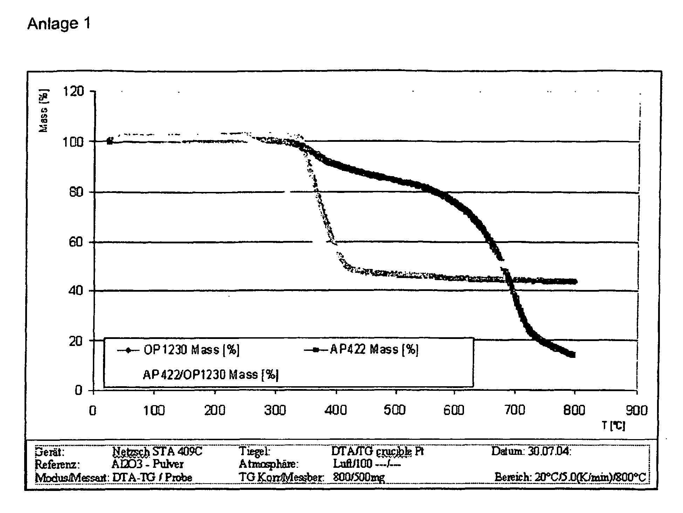

## Patentansprüche

1. Dämmschichtbildende Brandschutzbeschichtung, **dadurch gekennzeichnet, dass** sie eine Flammschutzmischung enthält, welche ein Phosphor/Stickstoff-Flammschutzmittel und ein Phosphinsäuresalz der Formel (I) und/oder ein Diphosphinsäuresalz der Formel (II) und/oder deren Polymere enthält, 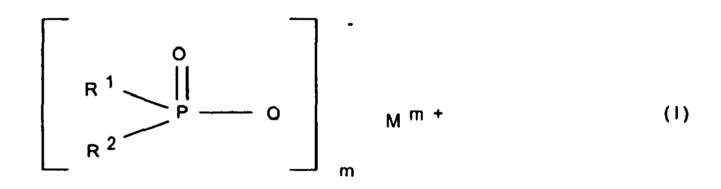 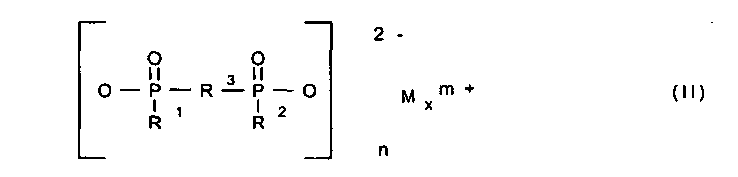 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4; n 1 bis 4 und x 1 bis 4 bedeuten.
und wobei sie
A) 10 bis 90 Gew.-% eines Epoxidharzes und
B) 2 bis 60 Gew.-% einer Flammschutzmischung, welche ein Phosphor/ Stickstoff-Flammschutzmittel und ein Phosphinsäuresalz der Formel (I) und/oder ein Diphosphinsäuresalz der Formel (II) und/oder deren Polymere enthält,
C) 3 bis 45 Gew.-% weitere Zusätze enthält.

2. Dämmschichtbildende Brandschutzbeschichtung nach Anspruch 1, **dadurch gekennzeichnet, dass** es sich bei den Phosphor/Stickstoff-Flammschutzmitteln um Ammoniumhydrogenphosphat, Ammoniumdihydrogenphosphat und/oder Ammoniumpolyphosphat handelt.

3. Dämmschichtbildende Brandschutzbeschichtung nach Anspruch 1 oder 2, **dadurch gekennzeichnet, dass** es sich bei den Phosphor/Stickstoff-Flammschutzmitteln um Ammoniumpolyphosphat der Formel (NH₄PO₃)ₙ, worin n eine Zahl von 10 bis ≤ 1000, bevorzugt zwischen 200 bis ≤ 1000 bedeutet, handelt.

4. Dämmschichtbildende Brandschutzbeschichtung nach einem oder mehreren der Ansprüche 1 bis 3, **dadurch gekennzeichnet, dass** es sich bei den Phosphor/Stickstoff-Flammschutzmitteln um Melam, Melem oder Melon, Dimelaminphosphat, Dimelaminpyrophosphat, Melamin-phosphat, Melaminpyrophosphat, Melaminpolyphosphat, Melampolyphosphat, Melonpolyphosphat und/oder Melempolyphosphat bzw. gemischte Polysalze hiervon handelt.

5. Dämmschichtbildende Brandschutzbeschichtung nach einem oder mehreren der Ansprüche 1 bis 4, **dadurch gekennzeichnet, dass** sie das Phosphor/Stickstoff-Flammschutzmittel und das Phosphinsäuresalz der Formel (I) und/oder das Diphosphinsäuresalz der Formel (II) und/oder deren Polymere im Gewichtsverhältnis von 0,1 bis 100 (Phosphor/Stickstoff-Flammschutzmittel) zu 100 bis 0,1 (Phosphinsäuresalz) enthält.

6. Dämmschichtbildende Brandschutzbeschichtung nach einem oder mehreren der Ansprüche 1 bis 5, **dadurch gekennzeichnet, dass** sie das Phosphor/Stickstoff-Flammschutzmittel und das Phosphinsäuresalz der Formel (I) und/oder das Diphosphinsäuresalz der Formel (II) und/oder deren Polymere im Gewichtsverhältnis von 1 bis 50 (Phosphor/Stickstoff-Flammschutzmittel) zu 50 bis 1 (Phosphinsäuresalz) enthält.

7. Dämmschichtbildende Brandschutzbeschichtung nach einem oder mehreren der Ansprüche 1 bis 6, **dadurch gekennzeichnet, dass** sie
A) 30 bis 85 Gew.-% eines Epoxidharzes und
B) 3 bis 50 Gew.-% einer Flammschutzmischung, welche ein Phosphor/Stickstoff-Flammschutzmittel und ein Phosphinsäuresalz der Formel (I) und/oder ein Diphosphinsäuresalz der Formel (II) und/oder deren Polymere enthält,
C) 5 bis 40 Gew.-% weitere Zusätze enthält.

8. Dämmschichtbildende Brandschutzbeschichtung nach einem oder mehreren der Ansprüche 1 bis 7, **dadurch gekennzeichnet, dass** sie weiterhin 0 bis 60 Gew.-% an Zusätzen, wie Beschleuniger, Füll- und Hilfsstoffe, Treibmittel und Stickstoffsynergisten, Kohlenstoffspender, Pigmente, Flexibilisatoren und/oder Reaktiv-Verdünner sowie ggf. weitere Additive enthält.

9. Dämmschichtbildende Brandschutzbeschichtung nach einem oder mehreren der Ansprüche 1 bis 8, **dadurch gekennzeichnet, dass** M Calcium, Aluminium oder Zink bedeutet.

10. Dämmschichtbildende Brandschutzbeschichtung nach einem oder mehreren der Ansprüche 1 bis 9, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

11. Dämmschichtbildende Brandschutzbeschichtung nach einem oder mehreren der Ansprüche 1 bis 10, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

## Claims

1. A fire-protection coating which forms an insulating layer, which comprises a flame retardant mixture which comprises a phosphorus/nitrogen flame retardant and comprises a phosphinic salt of the formula (I) and/or comprises a diphosphinic salt of the formula (II) and/or comprises polymers of these, 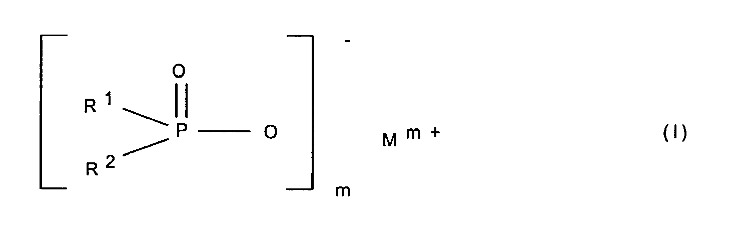 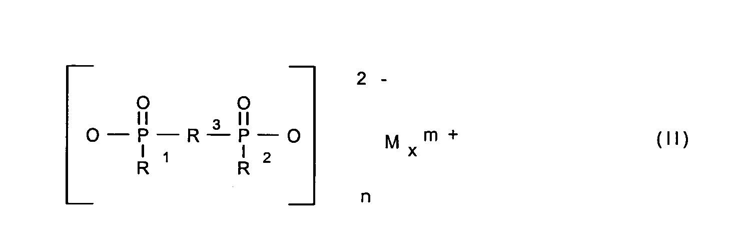 where
R¹, R² are identical or different and are C₁-C₆-alkyl, linear or branched, and/or aryl;
R³ is C₁-C₁₀-alkylene, linear or branched, C₆-C₁₀-arylene, -alkylarylene or -arylalkylene;
M is Mg, Ca, Al, Sb, Sn, Ge, Ti, Zn, Fe, Zr, Ce, Bi, Sr, Mn, Li, Na, K and/or a protonated nitrogen base;
m is from 1 to 4; n is from 1 to 4 and x is from 1 to 4,
and which comprises
A) from 10 to 90% by weight of an epoxy resin, and
B) from 2 to 60% by weight of a flame retardant mixture which comprises a phosphorus/nitrogen flame retardant and comprises a phosphinic salt of the formula (I), and/or comprises a diphosphinic salt of the formula (II), and/or comprises polymers of these,
C) from 3 to 45% by weight of other additives.

2. The fire-protection coating which forms an insulating layer, as claimed in claim 1, wherein the phosphorus/nitrogen flame retardants are ammonium hydrogenphosphate, ammonium dihydrogenphosphate, and/or ammonium polyphosphate.

3. The fire-protection coating which forms an insulating layer, as claimed in claim 1 or 2, wherein the phosphorus/nitrogen flame retardants are ammonium polyphosphate of the formula (NH₄PO₃)ₙ, where n is a number from 10 to ≤ 1000, preferably from 200 to ≤ 1000.

4. The fire-protection coating which forms an insulating layer, as claimed in one or more of claims 1 to 3, wherein the phosphorus/nitrogen flame retardants are melam, melem, or melon, dimelamine phosphate, dimelamine pyrophosphate, melamine phosphate, melamine pyrophosphate, melamine polyphosphate, melam polyphosphate, melon polyphosphate, and/or melem polyphosphate, or are mixed polysalts thereof.

5. The fire-protection coating which forms an insulating layer, as claimed in one or more of claims 1 to 4, which comprises the phosphorus/nitrogen flame retardant and comprises the phosphinic salt of the formula (I), and/or comprises the diphosphinic salt of the formula (II) and/or comprises polymers of these, in a ratio by weight of from 0.1 to 100 (phosphorus/nitrogen flame retardant) to from 100 to 0.1 (phosphinic salt).

6. The fire-protection coating which forms an insulating layer, as claimed in one or more of claims 1 to 5, which comprises the phosphorus/nitrogen flame retardant and comprises the phosphinic salt of the formula (I), and/or comprises the diphosphinic salt of the formula (II) and/or comprises polymers of these, in a ratio by weight of from 1 to 50 (phosphorus/nitrogen flame retardant) to from 50 to 1 (phosphinic salt).

7. The fire-protection coating which forms an insulating layer, as claimed in one or more of claims 1 to 6, which comprises
A) from 30 to 85% by weight of an epoxy resin, and
B) from 3 to 50% by weight of a flame retardant mixture which comprises a phosphorus/nitrogen flame retardant and comprises a phosphinic salt of the formula (I), and/or comprises a diphosphinic salt of the formula (II), and/or comprises polymers of these,
C) from 5 to 40% by weight of other additives.

8. The fire-protection coating which forms an insulating layer, as claimed in one or more of claims 1 to 7, which also comprises from 0 to 60% by weight of additives, such as accelerators, fillers, auxiliaries, blowing agents, nitrogen synergists, carbon donors, pigments, flexibilizers, and/or reactive diluents, and also, if appropriate, other additives.

9. The fire-protection coating which forms an insulating layer, as claimed one or more of claims 1 to 8, wherein M is calcium, aluminum, or zinc.

10. The fire-protection coating which forms an insulating layer, as claimed in one or more of claims 1 to 9, wherein R¹ and R² are identical or different and are methyl, ethyl, n-propyl, isopropyl, n-butyl, tert-butyl, n-pentyl, and/or phenyl.

11. The fire-protection coating which forms an insulating layer, as claimed in one or more of claims 1 to 10, wherein R³ is methylene, ethylene, n-propylene, isopropylene, n-butylene, tert-butylene, n-pentylene, n-octylene, or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene, or phenylbutylene.

## Revendications

1. Revêtement intumescent résistant au feu, **caractérisé en ce qu'**il contient un mélange pare-flammes, qui contient un agent pare-flammes phosphore/azote et un sel d'acide phosphinique de formule (I) et/ou un sel d'acide diphosphinique de formule (II) et/ou leurs polymères, 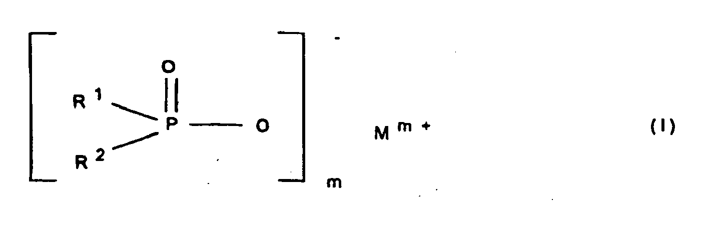 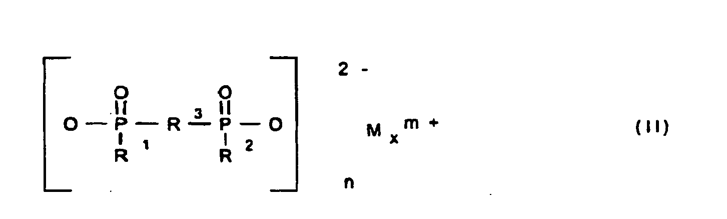 dans lesquelles
R¹, R² sont identiques ou différents et représentent un alkyle en C₁ à C₆, linéaire ou ramifié et/ou un aryle ;
R³ représente un alkylène en C₁ à C₁₀, linéaire ou ramifié, arylène, alkylarylène ou arylalkylène en C₆ à C₁₀ ;
M représente Mg, Ca, Al, Sb, Sn, Ge, Ti, Zn, Fe, Zr, Ce, Bi, Sr, Mn, Li, Na, K et/ou une base azotée protonée ;
m représente un nombre allant de 1 à 4 ; n un nombre allant de 1 à 4 et x un nombre allant de 1 à 4
et qui contient
A) 10 à 90% en poids d'une résine époxyde et
B) 2 à 60 % en poids d'un mélange pare-flammes, qui contient un agent pare-flammes phosphore/azote et un sel d'acide phosphinique de formule (I) et/ou un sel d'acide diphosphinique de formule (II) et/ou leurs polymères,
C) 3 à 45 % en poids d'autres additifs.

2. Revêtement intumescent résistant au feu selon la revendication 1, **caractérisé en ce qu'**il s'agit pour les agents pare-flammes phosphore/azote d'hydrogéno-phosphate d'ammonium, de dihydrogénophosphate d'ammonium et/ou de polyphosphate d'ammonium.

3. Revêtement intumescent résistant au feu selon la revendication 1 ou 2, **caractérisé en ce qu'**il s'agit pour les agents pare-flammes phosphore/azote de polyphosphate d'ammonium de formule (NH₄PO₃)ₙ, dans laquelle n représente un nombre de 10 à ≤ 1000, de préférence entre 200 et ≤ 1000.

4. Revêtement intumescent résistant au feu selon une ou plusieurs des revendications 1 à 3, **caractérisé en ce qu'**il s'agit pour les agents pare-flammes phosphore/azote de melam, melem ou melon, phosphate de dimélamine, pyrophosphate de dimélamine, phosphate de mélamine, pyrophosphate de mélamine, polyphosphate de mélamine, polyphosphate de melam, polyphosphate de melon et/ou polyphosphate de melem ou des polysels mixtes de ceux-ci.

5. Revêtement intumescent résistant au feu selon une ou plusieurs des revendications 1 à 4, **caractérisé en ce qu'**il contient l'agent pare-flammes phosphore/azote et le sel d'acide phosphinique de formule (I) et/ou le sel d'acide diphosphinique de formule (II) et/ou leurs polymères dans le rapport en poids de 0,1 à 100 (agent pare-flammes phosphore/azote) à 100 à 0,1 (sel d'acide phosphinique).

6. Revêtement intumescent résistant au feu selon une ou plusieurs des revendications 1 à 5, **caractérisé en ce qu'**il contient l'agent pare-flammes phosphore/azote et le sel d'acide phosphinique de formule (I) et/ou le sel d'acide diphosphinique de formule (II) et/ou leurs polymères dans le rapport en poids de 1 à 50 (agent pare-flammes phosphore/azote) à 50 à 1 (sel d'acide phosphinique).

7. Revêtement intumescent résistant au feu selon une ou plusieurs des revendications 1 à 6, **caractérisé en ce qu'**il contient
A) 30 à 85% en poids d'une résine époxyde et
B) 3 à 50 % en poids d'un mélange pare-flammes, qui contient un agent pare-flammes phosphore/azote et un sel d'acide phosphinique de formule (I) et/ou un sel d'acide diphosphinique de formule (II) et/ou leurs polymères,
C) 5 à 40 % en poids d'autres additifs.

8. Revêtement intumescent résistant au feu selon une ou plusieurs des revendications 1 à 7, **caractérisé en ce qu'**il contient en outre 0 à 60 % en poids d'additifs, comme des accélérateurs, des charges et adjuvants, des agents gonflants et des agents de synergie azotés, des dispensateurs de carbone, des pigments, des flexibilisants et/ou des diluants réactifs ainsi qu'éventuellement d'autres additifs.

9. Revêtement intumescent résistant au feu selon une ou plusieurs des revendications 1 à 8, **caractérisé en ce que** M représente le calcium, l'aluminium ou le zinc.

10. Revêtement intumescent résistant au feu selon une ou plusieurs des revendications 1 à 9, **caractérisé en ce que** R¹, R² sont identiques ou différents et représentent un méthyle, éthyle, n-propyle, iso-propyle, n-butyle, tert.-butyle, n-pentyle et/ou phényle.

11. Revêtement intumescent résistant au feu selon une ou plusieurs des revendications 1 à 10, **caractérisé en ce que** R³ représente un méthylène, éthylène, n-propylène, iso-propylène, n-butylène, tert.-butylène, n-pentylène, n-octylène ou n-dodécylène; phénylène ou napthylène; méthylphénylène, éthylphénylène, tert.-butylphénylène, méthylnaphtylène, éthylnaphtylène ou tert.butylnaphtylène ; phénylméthylène, phényléthylène, phénylpropylène ou phénylbutylène.
